# EUROPÄISCHE PATENTANMELDUNG

(11) **EP 3 409 502 A1**
(43) Veröffentlichungstag der Anmeldung: **05.12.2018**
(21) Anmeldenummer: 18169467.0
(22) Anmeldetag: 26.04.2018
(51) Int. Cl.: B60B 15/28, B60B 11/08, F16F 15/32, B60B 11/02

(54) **RADZUSATZGEWICHT FÜR EIN NUTZFAHRZEUG**

(30) Priorität: 01.06.2017 DE 102017209308
(71) Anmelder: Deere & Company, Moline, IL 61265 (US)
(72) Erfinder: Letscher, Jens, 68163 Mannheim (DE); Witzelsberger, Xaver, 68163 Mannheim (DE); Schmid, Michael, 68163 Mannheim (DE)
(74) Vertreter: Dehnhardt, Florian Christopher

(57) **Zusammenfassung**

Radzusatzgewicht (12) für ein Nutzfahrzeug, mit einer Gewichtsscheibe (14, 16) und einer an einer Radfelge (18) anbringbaren Halterung (20), auf der die Gewichtsscheibe (14, 16) längsaxial geführt ist, wobei zwischen Gewichtsscheibe (14, 16) und Halterung (20) ein manuell und/oder durch Fremdkraft betätigbarer Spannhebelverschluss (34) vorgesehen ist, der ein an der Halterung (20) angebrachtes erstes Montageelement (36), ein an der Gewichtsscheibe (14, 16) längsaxial angreifendes zweites Montageelement (38) sowie einen zwischen den beiden Montageelementen (36, 38) angeordneten Hebelmechanismus (40) mit einem an dem ersten Montageelement (36) lösbar befestigten Spannelement (42) sowie einem zwischen dem zweiten Montageelement (38) und dem Spannelement (42) derart angelenkten Betätigungshebel (44) aufweist, dass durch Verschwenken des Betätigungshebels (44) zwischen einer geöffneten und einer geschlossenen Stellung ein längsaxialer Abstand (Δd) zwischen den beiden Montageelementen (36, 38) zum Zwecke der Verspannung der Gewichtsscheibe (14, 16) gegenüber der Halterung (20) verringerbar ist.

## Beschreibung

Die Erfindung betrifft ein Radzusatzgewicht für ein Nutzfahrzeug, mit einer Gewichtsscheibe und einer an einer Radfelge anbringbaren Halterung zur Befestigung der Gewichtsscheibe.

Ein derartiges Radzusatzgewicht zur Ballastierung einer Antriebsachse eines landwirtschaftlichen Traktors ist beispielsweise aus der DE 10 2014 202 074 A1 bekannt. Das Radzusatzgewicht umfasst eine an einer Radfelge mittels eines Schraubkranzes befestigbare Adapterplatte sowie eine an der Adapterplatte anbringbare Gewichtsscheibe. Um die korrekte Positionierung der Gewichtsscheibe zu vereinfachen, sind mehrere ineinandergreifende konische Anlageflächen bzw. Codierungsausformungen und Distanzdome vorgesehen. Die endgültige Montage erfolgt hierbei mittels herkömmlicher Schraubbolzen.

Es ist Aufgabe der vorliegenden Erfindung, ein Radzusatzgewicht der eingangs genannten Art hinsichtlich seiner Handhabung während der Montage der Gewichtsscheibe weiter zu verbessern.

Diese Aufgabe wird durch ein Radzusatzgewicht für ein landwirtschaftliches Nutzfahrzeug mit den Merkmalen des Patentanspruchs 1 gelöst.

Das Radzusatzgewicht für ein Nutzfahrzeug umfasst eine Gewichtsscheibe und eine an einer Radfelge anbringbare Halterung, auf der die Gewichtsscheibe längsaxial geführt ist, wobei zwischen Gewichtsscheibe und Halterung ein manuell und/oder durch Fremdkraft betätigbarer Spannhebelverschluss vorgesehen ist, der ein an der Halterung angebrachtes erstes Montageelement, ein an der Gewichtsscheibe längsaxial angreifendes zweites Montageelement sowie einen zwischen den beiden Montageelementen angeordneten Hebelmechanismus mit einem an dem ersten Montageelement lösbar befestigten Spannelement sowie einem zwischen dem zweiten Montageelement und dem Spannelement derart angelenkten Betätigungshebel aufweist, dass durch Verschwenken des Betätigungshebels zwischen einer geöffneten und einer geschlossenen Stellung ein längsaxialer Abstand zwischen den beiden Montageelementen zum Zwecke der Verspannung der Gewichtsscheibe gegenüber der Halterung verringerbar ist.

Auf diese Weise ist es möglich, die Gewichtsscheibe vibrationssicher mit wenigen Handgriffen an der Halterung zu montieren.

Die Halterung weist beispielsweise einen hohlzylindrischen Grundkörper sowie eine Befestigungskrone auf, mittels derer sich die Halterung an der Radfelge verschrauben lässt, wobei die Gewichtsscheibe formschlüssig auf den hohlzylindrischen Grundkörper aufschiebbar ist. An dem hohlzylindrischen Grundkörper ausgebildete Längsrippen verringern die Reibung gegenüber der Gewichtsscheibe, sodass beim Aufschieben ein vergleichsweise geringer Kraftaufwand erforderlich ist.

Das insbesondere L-förmig ausgebildete zweite Montageelement stützt sich hierbei im Bereich eines ersten Schenkels an einer Wandung der Halterung bzw. des hohlzylindrischen Grundkörpers ab. Ein dazu senkrecht verlaufender zweiter Schenkel bildet eine Spannbacke, die der Anlage an der Gewichtsscheibe dient.

Zur sicheren Montage der Gewichtsscheibe sind typischerweise mehrere gleichmäßig entlang des Umfangs der Gewichtsscheibe zueinander angeordnete Spannhebelverschlüsse vorgesehen.

Die beiden Anlenkstellen des Betätigungshebels einerseits am zweiten Montageelement und andererseits am Spannelement sind vorzugsweise derart zueinander angeordnet, dass der Verlauf der Spannkraft beim Verschwenken des Betätigungshebels ein zwischen geöffneter und geschlossener Stellung liegendes Maximum aufweist. Dies stellt sicher, dass der Betätigungshebel bei Überschreiten des Maximums in die geschlossene Stellung gepresst wird, mithin der Spannhebelverschluss selbstsichernde Eigenschaften aufweist.

Mehrere an der Gewichtsscheibe vorgesehene innen- wie außenliegende Durchbrüche dienen der Aufnahme von Zinken einer Frontladergabel oder ermöglichen ein Einhängen eines Flaschenzugs, was die Handhabung der Gewichtsscheibe bei ihrer Montage auf der Halterung bzw. dem hohlzylindrischen Grundkörper vereinfacht. Typischerweise weist die aus Stahlguss bestehende Gewichtsscheibe eine Masse in der Größenordnung von 250 kg auf.

Weitere vorteilhafte Weiterbildungen des erfindungsgemäßen Radzusatzgewichts gehen aus den Unteransprüchen hervor.

Bevorzugt umfasst das erste Montageelement zwei gegenüberliegende Montagewangen, durch die ein Spannbolzen queraxial hindurchgeführt ist. Die Montagewangen können hierbei an der Trägerwand der Halterung bzw. des hohlzylindrischen Grundkörpers angeschweißt sein und ragen an dieser in Gestalt zugehöriger Befestigungsaugen hervor. Die beiden Befestigungsaugen weisen miteinander fluchtende Querbohrungen zur Aufnahme des Spannbolzens auf, wobei dieser darin verschweißt oder vernietet ist.

In diesem Zusammenhang ist der Begriff "längsaxial" dahingehend zu verstehen, dass dieser eine räumliche Orientierung entlang der Längsachse des im Wesentlichen rotationssymmetrischen Radzusatzgewichts bezeichnet, wohingegen der Begriff "queraxial" auf eine Orientierung quer zur Längsachse des im Wesentlichen rotationssymmetrischen Radzusatzgewichts gerichtet ist. Die Längsachse des Radzusatzgewichts fällt hierbei mit der Drehachse der Radfelge zusammen.

Des Weiteren besteht die Möglichkeit, dass das Spannelement einen in den Spannbolzen eingreifenden Montagehaken aufweist. Dieser erlaubt es, den Spannhebelverschluss vollständig auszuhängen und bei Nichtbenutzung in einem Werkzeugkasten oder dergleichen aufzubewahren. Das Spannelement kann zudem an einem dem Montagehaken abgewandten Bereich ein Gewinde aufweisen, das sich durch einen an dem Betätigungshebel angelenkten Spannblock hindurcherstreckt und sich auf einer Gegenseite am Spannblock mittels einer Spannmutter abstützt. Durch Drehen der Spannmutter lässt sich die effektive Länge des Spannelements zwischen dem Spannbolzen und der Anlenkstelle des Spannblocks am Betätigungshebel und damit letztlich die mittels des Spannhebelverschlusses in der geschlossenen Stellung aufbaubare Spannkraft variieren.

Zusätzlich kann der Hebelmechanismus in der geschlossenen Stellung mittels eines Sicherungselements arretierbar sein. Bei dem Sicherungselement handelt es sich beispielsweise um einen Sicherungssplint, der ein Herausklappen bzw. -schwenken des Betätigungshebels aus der geschlossenen Stellung verhindert. Der Sicherungssplint kann hierbei durch am ersten Schenkel des zweiten Montageelements ausgeformte Befestigungsflansche hindurchgesteckt sein.

Zur sicheren Lagerung des zweiten Montageelementes bzw. der daran ausgebildeten Spannbacke kann die Gewichtsscheibe eine umlaufende Nut oder Aussparung zur Ineingriffnahme eines an dem ersten Montageelement vorgesehenen Vorsprungs aufweisen. Da die Nut oder Aussparung umlaufend ausgebildet ist, ist eine Montage der Gewichtsscheibe in beliebiger Orientierung um die Längsachse möglich.

Der Betätigungshebel weist insbesondere eine Aufnahme für ein Betätigungswerkzeug auf, mittels dessen der Betätigungshebel manuell zwischen der geöffneten und der geschlossenen Stellung verschwenkbar ist. Die Aufnahme kann insbesondere als hohles Rohrstück zum Einstecken eines Handhebels mit quadratischem oder rundem Querschnitt ausgebildet sein, wobei das hohle Rohrstück auf einer Außenseite des Betätigungshebels angeschweißt ist. Das hohle Rohrstück ist derart angebracht, dass der Handhebel in der geschlossenen Stellung im Wesentlichen entlang der Längsachse des Radzusatzgewichts verläuft. Zum Verschwenken des Betätigungshebels in die geöffnete Stellung ist dieser in Richtung des Zentrums der Halterung bzw. des hohlzylindrischen Grundkörpers zu bewegen.

Das erfindungsgemäße Radzusatzgewicht wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein in Explosionsdarstellung wiedergegebenes erstes Ausführungsbeispiel des erfindungsgemäßen Radzusatzgewichts, umfassend innen- und außenliegende Gewichtsscheiben und eine an einer Radfelge anbringbare Halterung,
- Fig. 2: eine Querschnittsdarstellung des in Fig. 1 gezeigten Radzusatzgewichts in montiertem Zustand,
- Fig. 3: eine perspektivische Teildarstellung eines von dem Radzusatzgewicht gemäß Fig. 1 umfassten Spannhebelverschlusses,
- Fig. 4: eine Querschnittsdarstellung des Spannhebelverschlusses gemäß Fig. 3 in einer geöffneten Stellung, und
- Fig. 5: eine Querschnittsdarstellung des Spannhebelverschlusses gemäß Fig. 3 in einer geschlossenen Stellung.

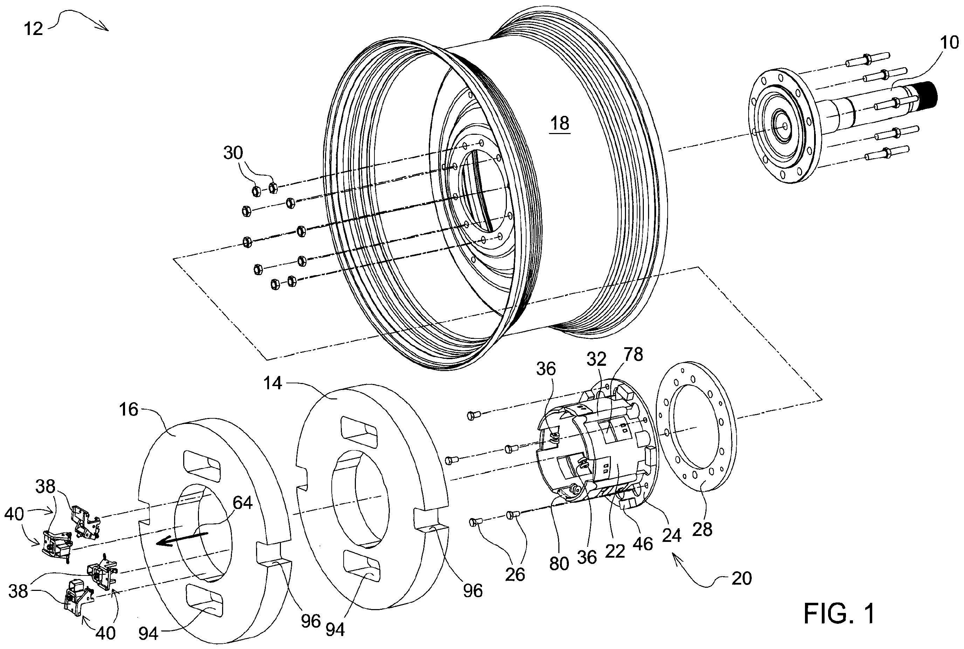

Fig. 1 zeigt ein in Explosionsdarstellung wiedergegebenes erstes Ausführungsbeispiel des erfindungsgemäßen Radzusatzgewichts.

Das beispielsgemäß an einer Hinterachse 10 eines (nicht abgebildeten) landwirtschaftlichen Traktors vorgesehene Radzusatzgewicht 12 umfasst eine innen- und außenliegende Gewichtsscheibe 14, 16 sowie eine an einer Radfelge 18 anbringbare Halterung 20.

Die Halterung 20 weist einen hohlzylindrischen Grundkörper 22 sowie eine Befestigungskrone 24 auf, mittels derer die Halterung 20 unter Verwendung zugehöriger Montagebolzen 26 an der Radfelge 18 verschraubt ist. Im vorliegenden Fall erfolgt die Verschraubung der Befestigungskrone 24 nicht unmittelbar an der Radfelge 18, sondern an einem Zwischenträger 28, der mittels Felgenmuttern 30 an der Radfelge 18 befestigt ist.

Die Gewichtsscheiben 14, 16 sind auf den hohlzylindrischen Grundkörper 22 formschlüssig aufschiebbar, sodass diese auf der Halterung 20 längsaxial geführt sind. An dem hohlzylindrischen Grundkörper 22 ausgebildete Längsrippen 32 verringern die Reibung gegenüber den Gewichtsscheiben 14, 16, sodass beim Aufschieben ein vergleichsweise geringer Kraftaufwand erforderlich ist. Entgegen der Darstellung können die Längsrippen auch an den Gewichtscheiben 14, 16 vorgesehen sein und formschlüssig an dem hohlzylindrischen Grundkörper anliegen.

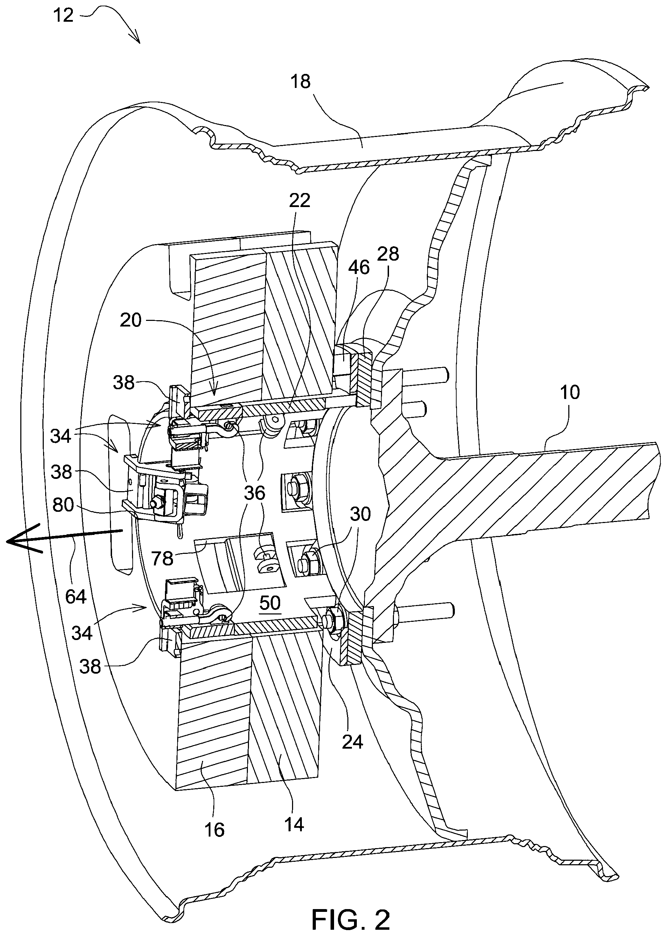

Wie sich insbesondere durch Vergleich mit Fig. 2 entnehmen lässt, sind zur Montage der beiden Gewichtsscheiben 14, 16 gegenüberliegend angeordnete Spannhebelverschlüsse 34 identischer Bauart vorgesehen. Diese sind im vorliegenden Fall gleichmäßig entlang des Umfangs der außenliegenden Gewichtsscheibe 16 mit einem Winkelabstand von 90° zueinander angeordnet.

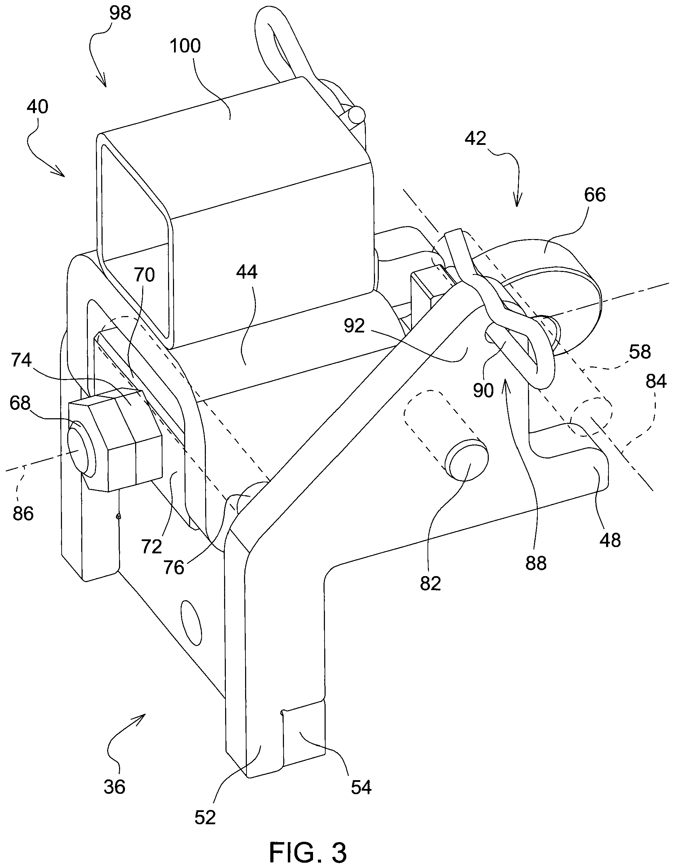

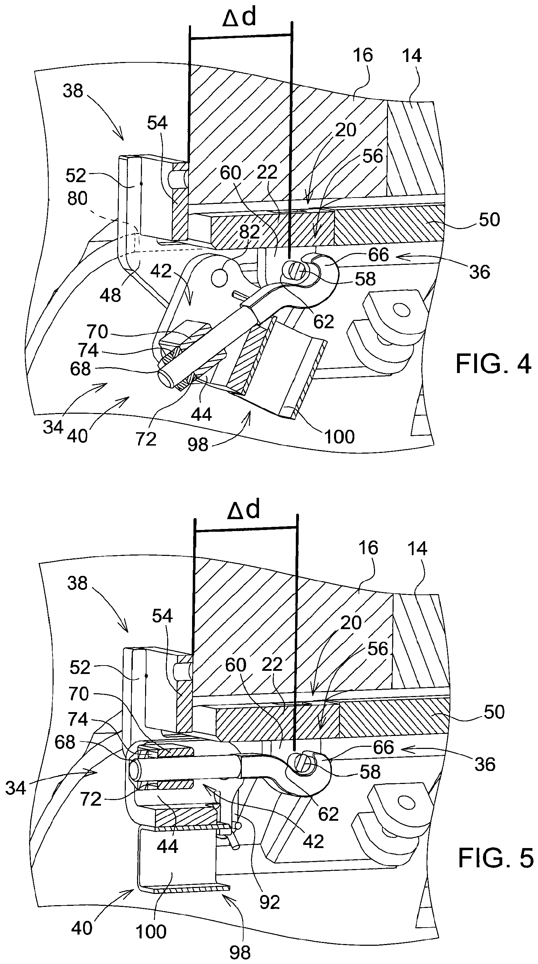

Einer der Spannhebelverschlüsse 34 ist in perspektivischer Detaildarstellung in Fig. 3 gezeigt, wobei dieser in Fig. 4 bzw. 5 in eingebautem Zustand in einer geöffneten bzw. geschlossenen Stellung wiedergeben ist.

Demgemäß weist der Spannhebelverschluss 34 ein an der Halterung 20 bzw. dem hohlzylindrischen Grundkörper 22 angebrachtes erstes Montageelement 36 (siehe Fig. 4 bzw. 5), ein an der außenliegenden Gewichtsscheibe 16 angreifendes zweites Montageelement 38 sowie einen zwischen den beiden Montageelementen 36, 38 angeordneten Hebelmechanismus 40 auf. Der Hebelmechanismus 40 wiederum umfasst ein an dem ersten Montageelement 36 lösbar befestigtes Spannelement 42 sowie einen zwischen dem zweiten Montageelement 38 und dem Spannelement 42 derart angelenkten Betätigungshebel 44, dass sich beim Verschwenken des Betätigungshebels 44 zwischen der geöffneten Stellung gemäß Fig. 4 und der geschlossenen Stellung gemäß Fig. 5 ein längsaxialer Abstand Δd zwischen den beiden Montageelementen 36, 38 zum Zwecke der Verspannung der betreffenden Gewichtsscheibe 14, 16 gegenüber der Halterung 20 bzw. dem hohlzylindrischen Körper 22 verringert. Mit anderen Worten bildet der Hebelmechanismus 40 ein Kompressionsmittel, das die außenliegende Gewichtsscheibe 16 gegen die innenliegende Gewichtsscheibe 14 sowie letztere gegen zugehörige Lagerblöcke 46 an der Halterung 20 presst und so die beiden Gewichtsscheiben 14, 16 in ihrer Position hält.

Die verwendeten Spanhebelverschlüsse 34 ermöglichen es, die Gewichtsscheiben 14, 16 in einer beliebigen Winkelposition an der Halterung 20 bzw. dem hohlzylindrischen Grundkörper 22 zu montieren.

Das L-förmig ausgebildete zweite Montageelement 38 stützt sich hierbei im Bereich eines ersten Schenkels 48 an einer Trägerwand 50 der Halterung 20 bzw. des hohlzylindrischen Grundkörpers 22 ab. Ein dazu senkrecht verlaufender zweiter Schenkel 52 bildet eine Spannbacke 54, die der Anlage an der Gewichtsscheibe 14, 16 dient.

Das erste Montageelement 36 umfasst zwei gegenüberliegende Montagewangen 56, durch die ein Spannbolzen 58 queraxial hindurchgeführt ist. Die Montagewangen 56 sind hierbei an der Trägerwand 50 der Halterung 20 bzw. des hohlzylindrischen Grundkörpers 22 angeschweißt und ragen an dieser in Gestalt zugehöriger Befestigungsaugen 60 hervor. Die beiden Befestigungsaugen 60 weisen miteinander fluchtende Querbohrungen 62 zur Aufnahme des Spannbolzens 58 auf, wobei dieser darin verschweißt oder vernietet ist.

In diesem Zusammenhang ist der Begriff "längsaxial" dahingehend zu verstehen, dass dieser eine räumliche Orientierung entlang einer Längsachse 64 des im Wesentlichen rotationssymmetrischen Radzusatzgewichts 12 bezeichnet, wohingegen der Begriff "queraxial" auf eine Orientierung quer zur Längsachse 64 des im Wesentlichen rotationssymmetrischen Radzusatzgewichts 12 gerichtet ist. Die Längsachse 64 des Radzusatzgewichts 12 fällt hierbei mit der Drehachse der Radfelge 18 zusammen.

Das Spannelement 42 weist einen in den Spannbolzen 58 eingreifenden Montagehaken 66 auf. Dieser erlaubt es, den Spannhebelverschluss 34 vollständig auszuhängen und bei Nichtbenutzung in einem Werkzeugkasten oder dergleichen aufzubewahren. Zudem weist das Spannelement 42 an einem dem Montagehaken 66 abgewandten Bereich ein Gewinde 68 auf, das sich durch einen an dem Betätigungshebel 44 angelenkten Spannblock 70 hindurcherstreckt und sich auf einer Gegenseite 72 am Spannblock 70 mittels einer konterbaren Spannmutter 74 abstützt. Durch Drehen der Spannmutter 74 lässt sich die effektive Länge des Spannelements 42 zwischen dem Spannbolzen 58 und der Anlenkstelle 76 des Spannblocks 70 am Betätigungshebel 44 und damit letztlich die mittels des Spannhebelverschlusses 34 in der geschlossenen Stellung aufbaubare Spannkraft variieren.

Soll lediglich die innenliegende Gewichtsscheibe 14 montiert werden, so werden die Spannhebelverschlüsse 34 innenliegend angebracht. In diesem Fall durchgreifen die Spannhebelverschlüsse 34, genauer gesagt deren als Spannbacken 54 ausgebildete zweite Schenkel 52 die Trägerwand 50 der Halterung 20 bzw. des hohlzylindrischen Grundkörpers 22 im Bereich korrespondierender Ausnehmungen 78 (siehe hierzu insbesondere Fig. 2). Demgegenüber sind im Falle der Montage beider Gewichtsscheiben 14, 16 die entsprechenden Ausnehmungen 80 angeschnitten, sodass die Halterung 20 bzw. der hohlzylindrische Grundkörper 22 stirnseitig bündig mit einer Außenseite der außenliegenden Gewichtsscheibe 16 abschließt.

Gemäß Fig. 4 bzw. 5 sind die beiden Anlenkstellen 76, 82 des Betätigungshebels 44 einerseits am zweiten Montageelement 38 und andererseits am Spannelement 42 derart zueinander angeordnet, dass der Verlauf der Spannkraft beim Verschwenken des Betätigungshebels 44 ein zwischen geöffneter und geschlossener Stellung liegendes Maximum aufweist. Hierzu liegt die Mittelachse 84 des Spannbolzens 58 wie auch die Anlenkstelle 76 des Gelenkblocks 70 auf einer parallel zur Längsachse 64 verlaufenden Verbindungslinie 86, wohingegen die Anlenkstelle 82 des Betätigungshebels 44 am zweiten Montageelement 38 dazwischen sowie in Schwenkrichtung des Betätigungshebels 44 quer dazu versetzt positioniert ist. Dies stellt sicher, dass der Betätigungshebel 44 bei Überschreiten des Maximums in die geschlossene Stellung gepresst wird, mithin der Spannhebelverschluss 34 selbstsichernde Eigenschaften aufweist. Die Spannwirkung des Hebelmechanismus 40 wird dabei letztlich durch die Längung des Spannelements 42 beim Verbringen des Betätigungshebels 44 in die geschlossene Stellung aufgebaut.

Zusätzlich ist der Hebelmechanismus 40 in der in Fig. 5 gezeigten geschlossenen Stellung mittels eines Sicherungselements 88 arretierbar. Bei dem Sicherungselement 88 handelt es sich um einen Sicherungssplint 90, der ein Herausklappen bzw. -schwenken des Betätigungshebels 44 aus der geschlossenen Stellung verhindert. Der Sicherungssplint 90 ist hierbei durch am ersten Schenkel 48 des zweiten Montageelements 38 ausgeformte Befestigungsflansche 92 hindurchgesteckt.

Abweichend von der in Fig. 2 dargestellten Ausführungsform können die Gewichtsscheiben 14, 16 zur sicheren Lagerung des zweiten Montageelements 38 bzw. der daran ausgebildeten Spannbacke 54 jeweils eine umlaufende Nut oder Aussparung aufweisen, in die ein an dem ersten Montagelement 36 vorgesehener Vorsprung eingreift (nicht abgebildet).

Mehrere an den Gewichtsscheiben 14, 16 vorgesehene innen- wie außenliegende Durchbrüche 94, 96 dienen der Aufnahme von Zinken einer Frontladergabel oder ermöglichen ein Einhängen eines Flaschenzugs, was die Handhabung der Gewichtsscheiben 14, 16 bei ihrer Montage auf der Halterung 20 bzw. dem hohlzylindrischen Grundkörper 22 vereinfacht. Typischerweise weisen die aus Stahlguss hergestellten Gewichtsscheiben 14, 16 jeweils eine Masse in der Größenordnung von 250 kg auf.

Des Weiteren weist der Betätigungshebel 44 eine Aufnahme 98 für ein Betätigungswerkzeug auf, mittels dessen der Betätigungshebel 44 manuell zwischen der geöffneten und der geschlossenen Stellung verschwenkbar ist. Die Aufnahme 98 ist als hohles Rohrstück 100 zum Einstecken eines (nicht abgebildeten) Handhebels mit quadratischem Querschnitt ausgebildet, wobei das hohle Rohrstück 100 auf einer Außenseite des Betätigungshebels 44 angeschweißt ist. Das hohle Rohrstück 100 ist derart angebracht, dass der Handhebel in der geschlossenen Stellung im Wesentlichen entlang der Längsachse 64 des Radzusatzgewichts 12 verläuft. Zum Verschwenken des Betätigungshebels 44 in die geöffnete Stellung ist dieser in Richtung des Zentrums der Halterung 20 bzw. des hohlzylindrischen Grundkörpers 22 zu bewegen.

Der Vollständigkeit halber sei angemerkt, dass das erfindungsgemäße Radzusatzgewicht auch an einer Vorderachse des landwirtschaftlichen Traktors angeordnet sein kann, wobei hier für jedes der Vorderräder meist nur eine einzelne Gewichtsscheibe vorgesehen ist. Auch kann es sich anstelle eines landwirtschaftlichen Traktors um ein beliebiges anderes Nutzfahrzeug handeln, so zum Beispiel ein landwirtschaftliches Fahrzeug beliebiger Bauart oder eine Bau- bzw. Forstmaschine.

## Patentansprüche

1. Radzusatzgewicht für ein Nutzfahrzeug, mit einer Gewichtsscheibe (14, 16) und einer an einer Radfelge (18) anbringbaren Halterung (20), auf der die Gewichtsscheibe (14, 16) längsaxial geführt ist, wobei zwischen Gewichtsscheibe (14, 16) und Halterung (20) ein manuell und/oder durch Fremdkraft betätigbarer Spannhebelverschluss (34) vorgesehen ist, der ein an der Halterung (20) angebrachtes erstes Montageelement (36), ein an der Gewichtsscheibe (14, 16) längsaxial angreifendes zweites Montageelement (38) sowie einen zwischen den beiden Montageelementen (36, 38) angeordneten Hebelmechanismus (40) mit einem an dem ersten Montageelement (36) lösbar befestigten Spannelement (42) sowie einem zwischen dem zweiten Montageelement (38) und dem Spannelement (42) derart angelenkten Betätigungshebel (44) aufweist, dass durch Verschwenken des Betätigungshebels (44) zwischen einer geöffneten und einer geschlossenen Stellung ein längsaxialer Abstand (Δd) zwischen den beiden Montageelementen (36, 38) zum Zwecke der Verspannung der Gewichtsscheibe (14, 16) gegenüber der Halterung (20) verringerbar ist.

2. Radzusatzgewicht nach Anspruch 1, **dadurch gekennzeichnet, dass** das erste Montageelement (36) zwei gegenüberliegende Montagewangen (56) umfasst, durch die ein Spannbolzen (58) queraxial hindurchgeführt ist.

3. Radzusatzgewicht nach Anspruch 2, **dadurch gekennzeichnet, dass** das Spannelement (42) einen in den Spannbolzen (58) eingreifenden Montagehaken (66) aufweist.

4. Radzusatzgewicht nach Anspruch 1, **dadurch gekennzeichnet, dass** der Hebelmechanismus (40) in der geschlossenen Stellung mittels eines Sicherungselements (90) arretierbar ist.

5. Radzusatzgewicht nach Anspruch 1, **dadurch gekennzeichnet, dass** die Gewichtsscheibe (14, 16) eine umlaufende Nut oder Aussparung zur Ineingriffnahme eines an dem ersten Montageelement (36) vorgesehenen Vorsprungs aufweist.

6. Radzusatzgewicht nach Anspruch 1, **dadurch gekennzeichnet, dass** der Betätigungshebel (44) eine Aufnahme (98) für ein Betätigungswerkzeug aufweist, mittels dessen der Betätigungshebel (44) zwischen der geöffneten und der geschlossenen Stellung verschwenkbar ist.
